# EUROPEAN PATENT APPLICATION

(11) **EP 4 808 258 A1**
(43) Date of publication of application: **16.09.2026**
(21) Application number: 26151037.4
(22) Date of filing: 09.01.2026
(51) Int. Cl.: H04W 74/0816, H04W 84/12

(54) **MANAGEMENT OF PRIORITIZED EDCA**

(30) Priority: 12.03.2025 US 202563770738 P
(71) Applicant: Apple Inc., Cupertino, CA 95014 (US)
(72) Inventor: HEDAYAT, Ahmed Reza, Cupertino, 95014 (US); ABOUELSEOUD, Mohamed, Cupertino, 95014 (US); JIANG, Jinjing, Cupertino, 95014 (US); AJAMI, Abdel Karim, Cupertino, 95014 (US); SEOK, Yong Ho, Cupertino, 95014 (US); MEHRNOUSH, Morteza, Cupertino, 95014 (US); LIU, Yong, Cupertino, 95014 (US)
(74) Representative: Zacco Denmark A/S

(57) **Abstract**

Methods, systems, and apparatuses are described herein for managing high priority Enhanced Distributed Channel Access (HP EDCA). In some embodiments, a Station (STA) sends, to an access point (AP), a request to use HP EDCA. The STA may receive, from the AP, a response to the request to use the HP EDCA. The response may indicate acceptance of use of the HP EDCA by the STA, or rejection of use of the HP EDCA by the STA.

## Description

### TECHNICAL FIELD

This application relates generally to wireless communication systems, including controlling the use of prioritized Enhanced Distributed Channel Access.

### BACKGROUND

Wireless communication technology uses various standards and protocols to transmit data between an access point and a wireless communication device. Wireless communication system standards and protocols can include, for example, 3rd Generation Partnership Project (3GPP) Long Term Evolution (LTE) (e.g., 4G), 3GPP New Radio (NR) (e.g., 5G), and Institute of Electrical and Electronics Engineers (IEEE) 802.11 standard for Wireless Local Area Networks (WLAN) (commonly known to industry groups as Wi-Fi^{®}).

In the 802.11 standard for WLAN, an access point (AP) is a device that creates a wireless local area network (WLAN), or Wi-Fi^{®} network. It may be connected to a wired network, such as an Ethernet network, and provides wireless access to that network for other devices. A station is a device that is capable of being wirelessly connected to the AP to join the WLAN network. Stations can be laptops, smartphones, tablets, or any other device with a WLAN adapter.

APs and stations communicate with each other using the Wi-Fi^{®} protocol. Various protocols have been established to increase security over a wireless communication network. For example, Simultaneous Authentication of Equals is the core authentication protocol of WPA3-Personal, and is mandated to be supported by all Wi-Fi^{®} Alliance certified devices, including both access points (APs) and non-AP stations (STAs).

### BRIEF DESCRIPTION OF THE SEVERAL VIEWS OF THE DRAWINGS

To easily identify the discussion of any particular element or act, the most significant digit or digits in a reference number refer to the figure number in which that element is first introduced.
FIG. 1 illustrates an example block diagram for EDCA in accordance with some embodiments.
FIG. 2 illustrates an example signaling diagram using HP EDCA in accordance with some embodiments.
FIG. 3 illustrates an example transmission timeline where four STAs contend for access to a same channel and there are collisions of DS/CTS frames which lead to failure of L-SIG detection, in accordance with some embodiments.
FIG. 4 illustrates an example transmission timeline where HP EDCA STA1 transmits DS/CTS followed by RTS, but receives no CTS back due to a hidden node, in accordance with some embodiments.
FIG. 5A illustrates an example of an SCS Request frame Action field formation in accordance with some embodiments.
FIG. 5B illustrates an example SCS Descriptor element in accordance with some embodiments.
FIG. 5C illustrates an example QoS Characteristics Element that includes a P-EDCA Usage field in accordance with some embodiments.
FIG. 5D illustrates an example Control Information field in accordance with some embodiments.
FIG. 6A illustrates an example SCS Response frame Action field in accordance with some embodiments.
FIG. 6B illustrates an example format of an SCS Status List in accordance with some embodiments.
FIG. 6C illustrates an example status code table in accordance with some embodiments.
FIG. 7 illustrates an example transmission timeline for HP EDCA in accordance with some embodiments.
FIG. 8 illustrates an example transmission timeline for HP EDCA in accordance with some embodiments.
FIG. 9 illustrates an example transmission timeline where a same scrambling sequence/seed is used from a last PPDU from previous TXOP, in accordance with some embodiments.
FIG. 10 illustrates two example transmission timelines, where a first transmission timeline does not use HP EDCA and a second transmission timeline uses HP EDCA, in accordance with some embodiments.
FIG. 11 illustrated a method performed by an STA, according to embodiments herein.
FIG. 12 illustrated a method performed by an AP, according to embodiments herein.
FIG. 13 illustrates an example system for performing signaling between a wireless device and a network device, according to embodiments disclosed herein.

### DETAILED DESCRIPTION

Wireless communication technology uses various standards and protocols to transmit data between an access point and a wireless communication device. One standard that is used for wireless communication is Institute of Electrical and Electronics Engineers (IEEE) 802.11 standard for Wireless Local Area Networks (WLAN) (commonly known to industry groups as Wi-Fi^{®}). Wi-Fi^{®} provides a convenient way to establish a network between devices. A device (e.g., a station) may connect to a Wi-Fi^{®} access point to join a network and connect to the internet wirelessly.

An Access Point (AP) is a device that creates a wireless local area network (WLAN), or Wi-Fi^{®} network. A station (STA) is a device that is capable of being wirelessly connected to the AP to join the network. A mobile-AP is a device that can function as a portable AP to provide internet access to nearby STAs. For example, a mobile-AP may be a cellular phone with hotspot mode enabled.

Various embodiments are described with regard to a STA and an AP. However, reference to an STA and AP is merely provided for illustrative purposes. The example embodiments may be utilized with any electronic component that may establish a connection to a network and is configured with the hardware, software, and/or firmware to exchange information and data with the network. Therefore, the STAs and APs as described herein are used to represent any appropriate electronic component.

Enhanced Distributed Channel Access (EDCA) is part of the IEEE 802.11 channel access. EDCA was designed to improve Quality of Service (QoS) in wireless networks. It enables different types of traffic to be prioritized, so that time-sensitive applications receive better access to the wireless channel.

EDCA includes four access categories that are labeled, from highest to lowest priority, Voice (VO), Video (VI), Best Effort (BE), and Background (BK). These categories help manage network traffic by giving higher priority to latency-sensitive applications like voice and video, while lower-priority traffic, such as file downloads or emails, competes for remaining bandwidth.

Channel access parameters in EDCA are designed so that a higher-priority access category statistically has a greater chance of accessing the channel and transmitting a frame into the wireless medium (WM). This prioritization is achieved by adjusting factors such as contention window (CW) size and arbitration interframe space (AIFS), allowing critical applications to experience minimal delays and interruptions.

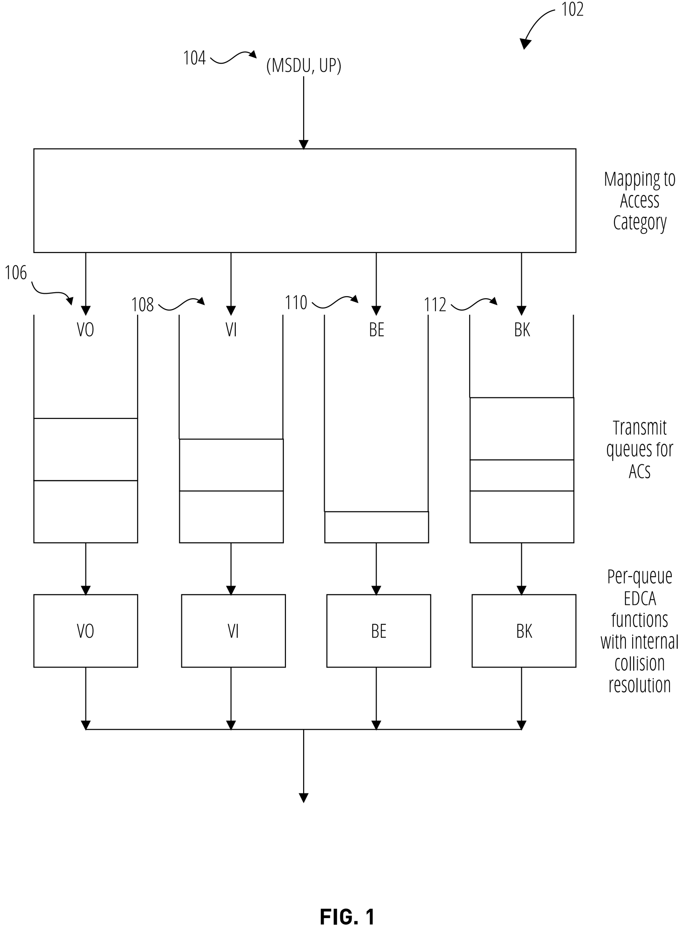

FIG. 1 illustrates an example block diagram 102 for EDCA in accordance with some embodiments. An STA may use EDCA to prioritize packets to be sent. As shown, incoming MAC Service Data Units (MSDU) along with their User Priority (UP) values (e.g., MSDU, UP 104) may be mapped to access categories based on priorities.

Each access category may have its own transmit queue for buffering packets before transmission. For example, there may be a VO queue 106, a VI queue 108, a BE queue 110, and a BK queue 112. Higher-priority traffic like VO and VI typically has lower latency requirements and gets prioritized over BE and BK traffic. Additionally, there may be per-queue EDCA functions with internal collision resolution.

However, despite statistical prioritization among access categories, there is a chance that a higher priority and low latency traffic gets stuck and does not get delivered on time.

To attempt to prevent higher priority and low latency traffic from getting stuck, some embodiments may employ a High Priority (HP) EDCA (which may also be referred to as Prioritized EDCA (P-EDCA)) framework. Traditional EDCA has limitations that impact its ability to support high-priority traffic effectively. While it provides access opportunities for all traffic types, it cannot guarantee channel access, even for time-sensitive applications such as voice and video. In some scenarios, lower-priority traffic can interfere, making it difficult for high-priority streams to obtain a transmission opportunity (TXOP). This may contribute to latency.

To address these issues, an HP EDCA mechanism may be implemented. This approach may separate STAs with latency-sensitive traffic from the general contention pool, allowing them to signal their need for prioritized access before standard EDCA contention begins. These STAs may send a signal to reserve a channel for a short contention interval during which the STAs with latency-sensitive traffic may contend.

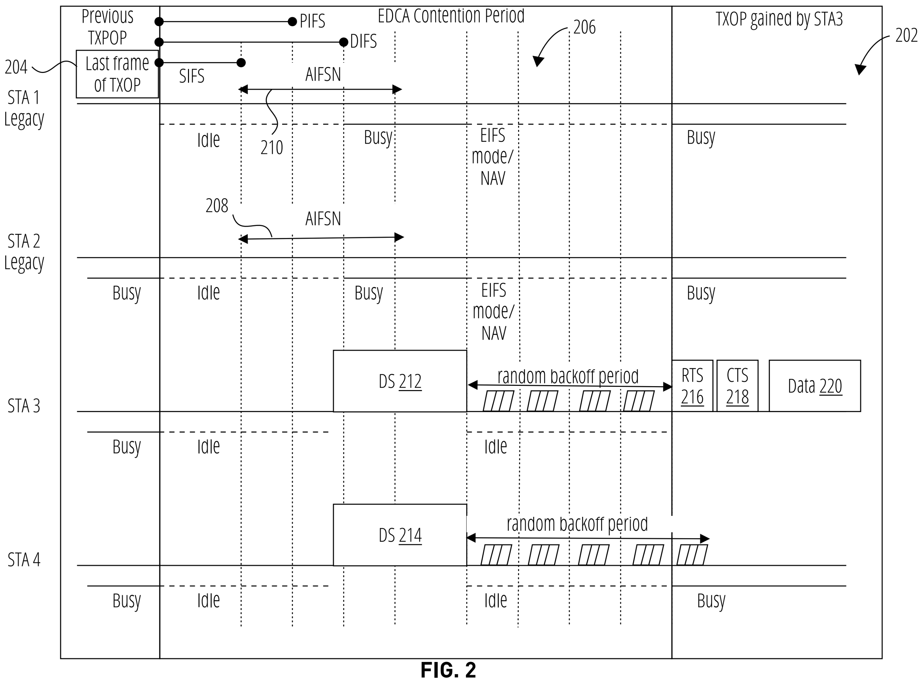

FIG. 2 illustrates an example signaling diagram 202 using HP EDCA in accordance with some embodiments. In the illustrated embodiment, timing for contention of a next TXOP may be based on a last frame of a previous TXOP 204. In EDCA contention periods (e.g., EDCA contention period 206), different interframe spaces (IFS) may define waiting times before a station attempts transmission, in an attempt to ensuring priority-based access. Short Interframe Space (SIFS) is the shortest and may be used for higher priority communication. Point Coordination Interframe Space (PIFS) is slightly longer. Distributed Interframe Space (DIFS) is the longest timing interval. The different IFSs may provide a mechanism to give higher priority to time-sensitive traffic. As shown, in HP EDCA, customized interframe spaces like AIFSN (Arbitration Interframe Space Number) (e.g., AIFSN 210 and AIFSN 208) can be used to further enhance latency-sensitive traffic access.

In HP EDCA, an STA with low latency traffic transmits a defer signal/frame (DS), bypassing the existing EDCA rules. In some embodiments, the DS may be a clear to send (CTS) frame. For example, in the illustration, STA 3 and STA 4 have low latency traffic. Accordingly, STA 3 and STA 4 send DS 212 and DS 214 while other STAs (e.g., STA 1 and STA 2) without low latency traffic are applying their AIFSN.

Other STAs that receive the DS would refrain from transmission for a duration (referred to as Short Contention Interval). Refraining from transmitting may be either due to the NAV set in the DS frame, or due to a legacy 802.11 rule that causes receiving STAs to defer for extended inter-frame spacing (EIFS) duration. For example, in the illustrated embodiment STA 1 and STA 2 receive the DS/CTS frame from STA 3 and STA 4 and refrain from transmitting for a duration set by NAV in the DS frame.

During the Short Contention Interval, the STA that has transmitted the DS frame would contend to transmit its low latency data. There is a possibility that more than one STA sends the DS frame. The STAs contend during the Short Contention Interval. One of the STAs wins the contention, and the other STAs try again later by transmitting another DS frame. For example, in the illustrated embodiment, STA 3 and STA 4 contend for the next TXOP. In the illustrated embodiment, the STA 3 has a smaller random backoff period (BP) than STA 4. The BP is a randomized waiting time an STA must wait before attempting transmission in a Wi-Fi^{®} network's EDCA contention period. Because STA 3 has a smaller BP it successfully gains the next TXOP and sends a request to send (RTS) 216, a CTS 218, and its Data 220. STA 4 will try again later by transmitting another DS frame.

However, there are some concerns on operation of High Priority EDCA. For example, in some likely scenarios, HP EDCA may not go as planned, causing further access delay for all the STAs (HP STAs and legacy STAs alike). An HP STA may refer to an STA that is capable of implementing HP EDCA.

A first scenario where HP EDCA may not go as planned may involve multiple HP EDCA STAs transmit DS/CTS frames. Note that DS/CTS frame is used to signify either a dedicated DS frame is sent by an STA for HP EDCA or a CTS frame is sent by an STA for HP EDCA. In the first scenario, a collision of DS/CTS frames may lead to legacy signal (L-SIG) failure (of the DS/CTS frame) resulting in no short contention interval. For instance, if multiple STAs send a DS/CTS frame, the signals may collide and the other STAs may fail to properly decode the L-SIG information. This may result in the other STAs not waiting for the EIFS to expire before accessing the channel during the short contention interval. A small contention window may give a higher chance for collision after DS/request to send (RTS), leading to retrial of DS/CTS.

A second scenario where HP EDCA may not go as planned may involve multiple Basic Service Sets (BSSs). For example, if there are multiple HP EDCA STAs across multiple BSSes transmitting DS/CTS frames, there is a chance of collision and failure of L-SIG detection, leading to repeated transmission of DS/CTS.

In a third scenario where HP EDCA may not go as planned, an HP EDCA STA may transmit DS/CTS followed by RTS, but receive no CTS back (due to hidden node). The STA may retry transmitting DS/CTS for a few times, likely with the same outcome.

Without any management from APs, HP STAs may keep trying HP EDCA leading to more channel access delays. Some embodiments herein provide methods, apparatuses, and systems for handling such operation concerns for HP EDCA.

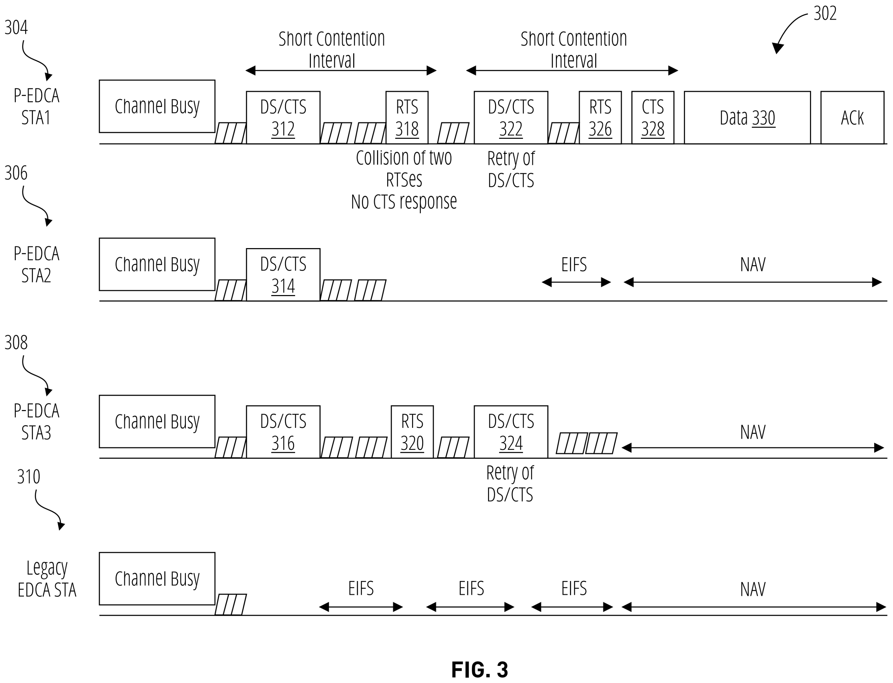

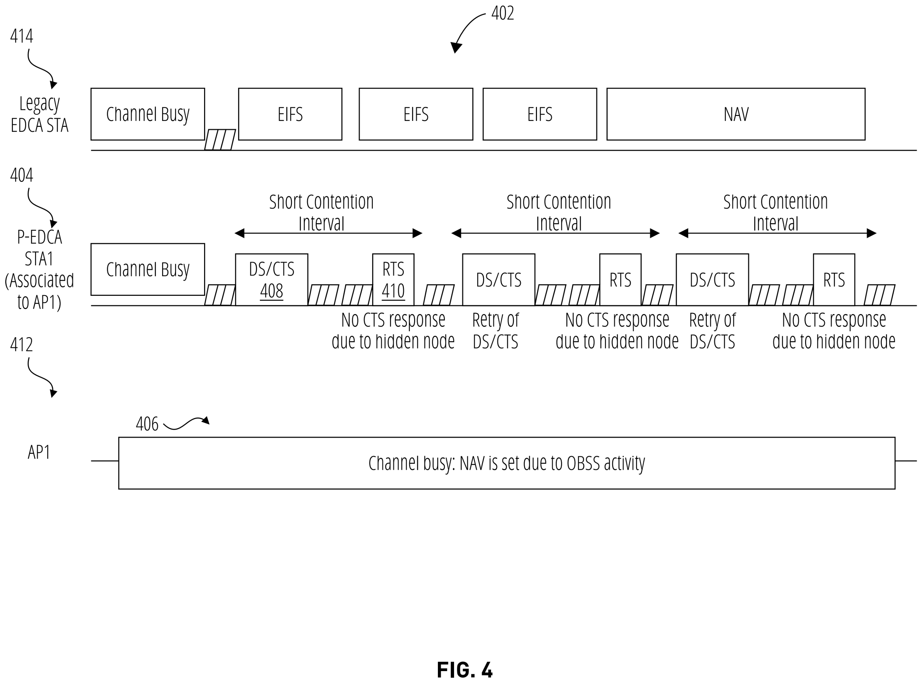

FIG. 3 and FIG. 4 are example timelines that illustrate these three scenarios where the HP EDCA does not go as planned. Specifically, FIG. 3 illustrates an example transmission timeline 302 where four STAs contend for access to a same channel and there are collisions of DS/CTS frames which lead to failure of L-SIG detection (e.g., first scenario and second scenario), in accordance with some embodiments. In the illustrated embodiment, P-EDCA STA1 304, P-EDCA STA2 306, P-EDCA STA3 308, and legacy EDCA STA 310 are using the same channel.

As shown, P-EDCA STA1 304, P-EDCA STA2 306, and P-EDCA STA3 308 may each send a DS/CTS frame (e.g., DS/CTS 312, DS/CTS 314, and DS/CTS 316) to interrupt the normal EDCA due to low latency data that these STAs have to transmit using HP EDCA. Accordingly, legacy EDCA STA 310 may receive the DS/CTS frames and waiting for the EIFS to expire before accessing the channel. However, in some instances the DS CTS frames may collide and the legacy EDCA STA 310 may fail to detect L-SIG in the DS/CTS frames.

After the DS CTS frames are detected, P-EDCA STA1 304, P-EDCA STA2 306, and P-EDCA STA3 308 contend for the channel. In the illustrated embodiment, the P-EDCA STA2 306 has a longer BO period than P-EDCA STA1 304 and P-EDCA STA3 308. Accordingly, P-EDCA STA2 306 does not win the contention and therefore waits for another opportunity to use the channel.

However, in the illustrated embodiment, P-EDCA STA1 304 and P-EDCA STA3 308 both have the same BO period which results in both of them sending an RTS frame (e.g., RTS 318 and RTS 320). In the illustrated embodiment, this results in a collision between the two RTSs which results in no CTS response from the AP.

When P-EDCA STA1 304 and P-EDCA STA3 308 receive no response, the DS/CTS 322 and the DS/CTS 324 send another DS/CTS frame (e.g., DS/CTS 322 and DS/CTS 324), and contend for the channel again. During this second contention period, the P-EDCA STA1 304 has a shorter BO period than P-EDCA STA2 306 and successfully sends RTS 326. In response, the P-EDCA STA1 304 receives a CTS 328 and is able to send its data 330. As shown, the collisions may cause channel access delay.

FIG. 4 illustrates an example transmission timeline 402 where HP EDCA STA1 404 transmits DS/CTS followed by RTS, but receives no CTS back due to a hidden node (e.g., third scenario), in accordance with some embodiments. As shown, the HP EDCA STA1 404 may send DS/CTS 408 and then send a RTS 410. However, because the channel is busy 406 due to a hidden node, the AP1 412 does not send a CTS back to the HP EDCA STA1 404. The HP EDCA STA1 404 may then retry transmitting the DS/CTS and RTS frames multiple times, and continue to not receive a CTS back. This may result in the legacy EDCA STA 414 becoming starved for channel access.

Embodiments herein may provide management, enablement, or admission control for prioritized EDCA Channel Access. Given the possibility of unintended consequences of use of HP EDCA, some embodiments herein suggest avoiding a "default mode" of HP EDCA with legacy BSSes. In some embodiments, the only mode of HP EDCA use is in negotiation with a capable UHR AP. For example, a UHR AP may enable/disable use of HP EDCA. If it is enabled, the UHR AP may recommend HP EDCA parameters. In some embodiments, the UHR AP may accept/reject a UHR STA request to use HP EDCA. In some embodiments, the UHR STA is only allowed to use HP EDCA under above conditions (e.g., no default HP EDCA).

In some embodiments, to enable or disable use of HP-EDCA, a UHR AP may set a field (e.g., "HP-EDCA Parameter Set Present" or "HP-EDCA Enabled") in the UHR Operation field which is carried in the Beacon frame transmitted by the UHR AP. In some embodiments, if the field is set to True (e.g., to 1), HP-EDCA is enabled, and an additional "HP-EDCA Parameter Set" may specify the attributes of HP-EDCA. Attributes such HP-EDCA AIFSN, HP-EDCA Minimum and Maximum Contention Window (CW), HP-EDCA max TXOP duration may be specified in the HP-EDCA Parameter Set. The "HP-EDCA Parameter Set" may be carried in the Beacon frame, or UHR STAs may receive this information element during authentication and association. In some embodiments, if "HP-EDCA Parameter Set Present" or "HP-EDCA Enabled" is set to False (e.g., to 0), then the use of HP-EDCA is disabled. A change in the value of this field, "HP-EDCA Parameter Set Present" or "HP-EDCA Enabled", may set Critical Update Flag and increment BSS Parameter Change Count (BPCC).

In some embodiments, to request or negotiate the use of HP EDCA, a UHR STA may send an HP-EDCA Enablement Request frame to its associated UHR AP. The HP-EDCA Enablement Request frame may include fields such as: Element ID, Length, Element ID Extension, Token, Traffic Identifier (TID), Link identifier (LinkID), Stream Classification Service (SCS) identifier (SCSID), Maximum Data Rate, Minimum Data Rate, HP-EDCA expected duration, HP-EDCA use start time and potentially more fields. The UHR STA may specify for which TID and under which SCSID it intends to use HP-EDCA, and for the specified duration where the traffic has the specified minimum and maximum data rate.

Once the UHR STA sends the HP-EDCA Enablement Request frame to its associated UHR AP, the STA waits to receive the HP-EDCA Enablement Response frame from its associated UHR AP. The HP-EDCA Enablement Response frame may include the following fields: Element ID, Length, Element ID Extension, Token, Status Code, Permitted Data Rate, Permitted HP-EDCA duration and potentially more fields. In the status code the AP may specify whether the request to use HP-EDCA is Accepted, Rejected, or Revised. The UHR AP may verify whether the requesting UHR STA has a valid SCSID for which it is requesting use of HP-EDCA. If such SCSID is not available or if it is expired, the AP rejects the use of HP-EDCA. Under other circumstances the AP may also reject the use of HP-EDCA. For example, the number of STAs using HP-EDCA may be exceeding a limit that the AP considers, or the HP EDCA may be used by some STAs for traffic streams that have high loads, etc. If the request is accepted or revised, the AP may specify that the UHR STA may use HP-EDCA under the Permitted Data Rate and for Permitted HP-EDCA duration.

In some embodiments, to request or negotiate the use of HP EDCA, the STA may use a Stream Classification Service (SCS)/Quality of Service (QoS) Characteristics mechanism. For example, when negotiating use of SCS mechanism, a UHR STA may also request to use HP EDCA. In some embodiments, the UHR STA may only be allowed to use HP EDCA when certain conditions are met. For example, The STA may be allowed to use HP EDCA if: the delay bound is being reached for some of its pending MSDUs; or if the STA has not been triggered beyond Max Service Interval. Other conditions may be used for determining when the STA is allowed to use HP EDCA. In some embodiments, the STA may not be allowed to use HP EDCA more than a threshold number of times between two consecutive triggering. That threshold may be preconfigured or configurable.

The UHR AP may accept or reject the use of HP EDCA. The decision to accept or reject the use of HP EDCA may be based on various parameters. For example, the decision may be based on the number of STAs already using HP EDCA.

In the SCS/QoS Characteristics agreement, the STA may request to use HP EDCA under certain conditions. For example, if the STA delay-bound being approached for pending MSDUs the STA may use HP EDCA. The STA may stop using HP EDCA when the SCS session is terminated or expires.

In a first case (case 1), SCS+QoS Characteristics are enabled HP EDCA use. For example, the AP may have enabled HP EDCA to be used, and the STA may negotiate parameters for the HP EDCA. In some embodiments, the STA may use a default HP EDCA parameter set. For example, the HP EDCA parameter set used by the STA may be a default set or an announced set of parameters in an Association Response or in a Beacon frame. In some embodiments, the STA may use an SCS procedure to negotiate HP EDCA parameter set (this may use additional elements in SCS to negotiate). Negotiation of HP EDCA use may be per link.

In a second case (case 2), SCS+QoS Characteristics may need AP's agreement to use HP EDCA. The AP may permit or reject a request from an STA to use HP EDCA. In some embodiments, the AP may permit the STA to use default HP EDCA parameter set (hence, no HP EDCA parameter negotiations). In some embodiments, the AP may permit the STA to use provided HP EDCA parameter set (possible HP EDCA parameter negotiations).

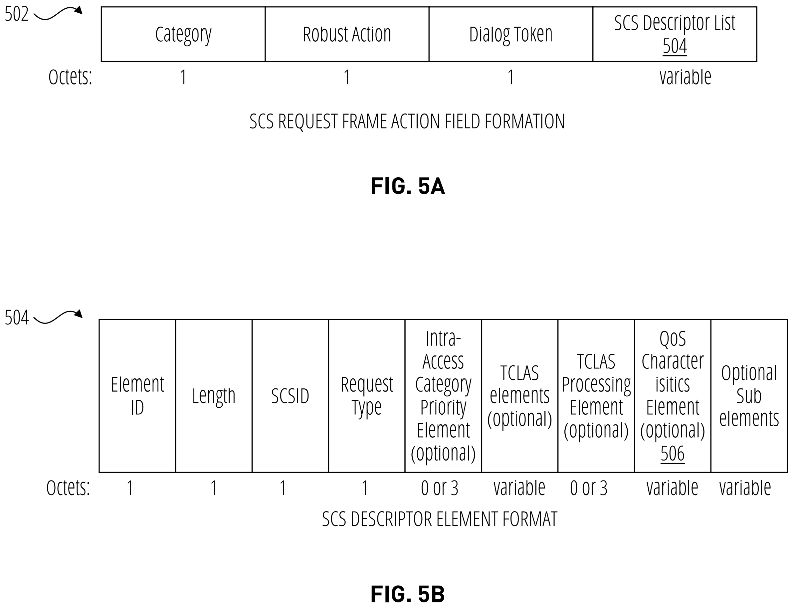

FIGS. 5A-5D illustrate an example of an SCS mechanism that may be used by an STA to request to use an HP EDCA. Specifically, FIG. 5A illustrates an example of an SCS Request frame Action field formation 502 in accordance with some embodiments. The SCS Request frame Action field formation 502 may be used by an STA to request to use HP EDCA. For example, in some embodiments, the request may be included in the SCS Descriptor element 504.

For instance, FIG. 5B illustrates an example SCS Descriptor element 504 in accordance with some embodiments. As shown, the SCS Descriptor element 504 may include a QoS Characteristics Element 506. The request to use HP EDCA, which may also be referred to as prioritized EDCA (P-EDCA), may be included in the QoS Characteristics Element 506.

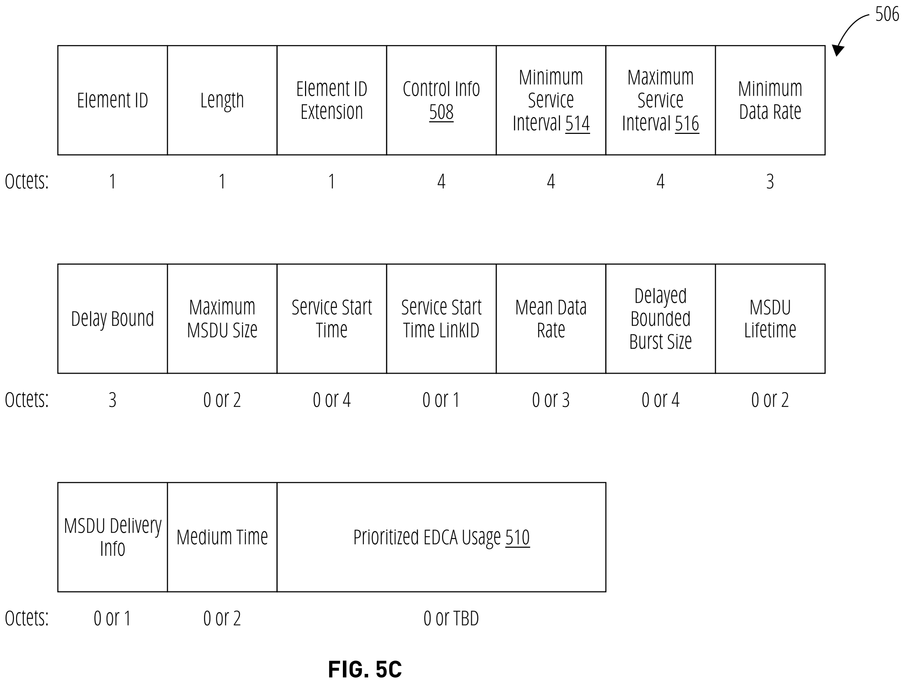

FIG. 5C illustrated an example QoS Characteristics Element 506 that includes a P-EDCA Usage field 510 in accordance with some embodiments. The P-EDCA Usage field 510 may be used by an STA to request to use HP EDCA. The signaling in QoS Characteristics Element 506 may include a Control Information field 508.

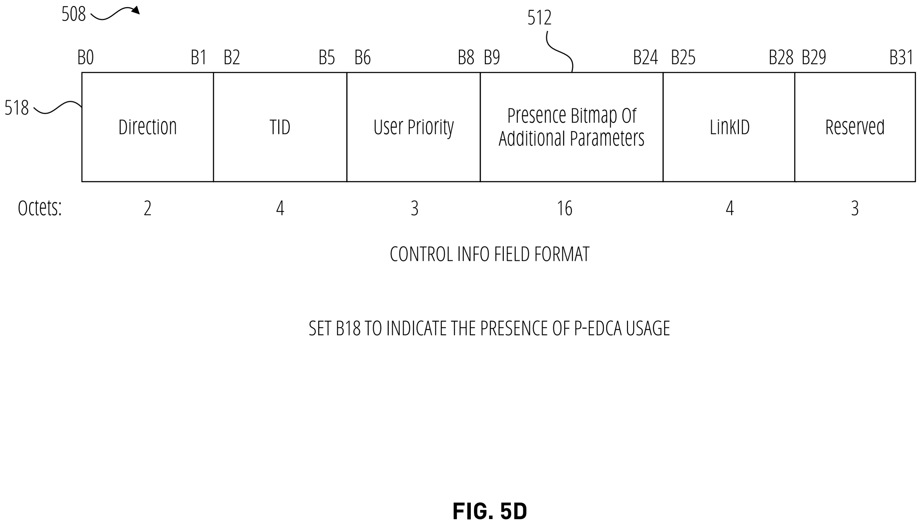

FIG. 5D illustrates an example Control Information field 508 in accordance with some embodiments. As shown, the Control Information field 508 may include a presence bitmap 512. The presence bitmap 512 may indicate the presence of certain parameters in the QoS Characteristics Element 506 shown in FIG. 5C. For example, the STA may use the Control Information field 508 and the presence bitmap 512 to indicate that the request to use HP-EDCA (e.g., P-EDCA Usage field 510) is present in the QoS Characteristics Element 506.

In some embodiments, bit 17 (B17) may be assigned to be used in the Control Information field 508/presence bitmap 512 to indicate that the P-EDCA Usage field 510 is present. For example, the STA may set a bit (e.g., B17) in the presence bitmap 512 to one to indicate that the P-EDCA Usage field 510 is present, and may set the bit to zero to indicate that the P-EDCA Usage field 510 is not present.

As shown in FIG. 5C, a new field may be added to the QoS Characteristics Element 506 for Prioritized EDCA Usage (e.g., P-EDCA Usage field 510). The P-EDCA Usage field 510 may indicate that the STA is requesting to use Prioritized EDCA for the specified links (e.g., the links that are identified in the P-EDCA Usage field 510). For example, the P-EDCA Usage field 510 may include a specific link for which the STA is requesting to use HP EDCA. In some embodiments the P-EDCA Usage field 510 may include other sub-fields such as: HP EDCA CWmin, HP EDCA CWmax, HP EDCA Arbitration Inter-Frame Space Number (AIFSN), etc. CWmin may be the minimum size of the contention window used in the backoff algorithm for the HP EDCA, and CWmin may be the maximum size of the contention window used in the backoff algorithm for the HP EDCA.

In some embodiments, if the Minimum Service Interval 514/Maximum Service Interval 516 are unspecified/unknown, the STA may set the Direction subfield 518 of the Control Information field 508 to 0 (UL) and may set the Minimum Service Interval 514/Maximum Service Interval 516 to 0. When Minimum Service Interval 514/Maximum Service Interval 516 are set to zero in UL direction, the AP does not consider this QoS Characteristics Element 506 as a reference for scheduling. Otherwise, the STA may set the Minimum Service Interval 514/Maximum Service Interval 516 per baseline.

When the AP receives the SCS Request frame Action field formation 502, the AP may respond to the STA to indicate whether the HP EDCA request is accepted or rejected. For example, the AP may respond to the SCS Request frame Action field formation 502 per baseline procedure, with additional Status in SCS Response if the request for HP EDCA is accepted or rejected. The AP may update the use of HP EDCA by sending an unsolicited SCS Response frame with a new Status code.

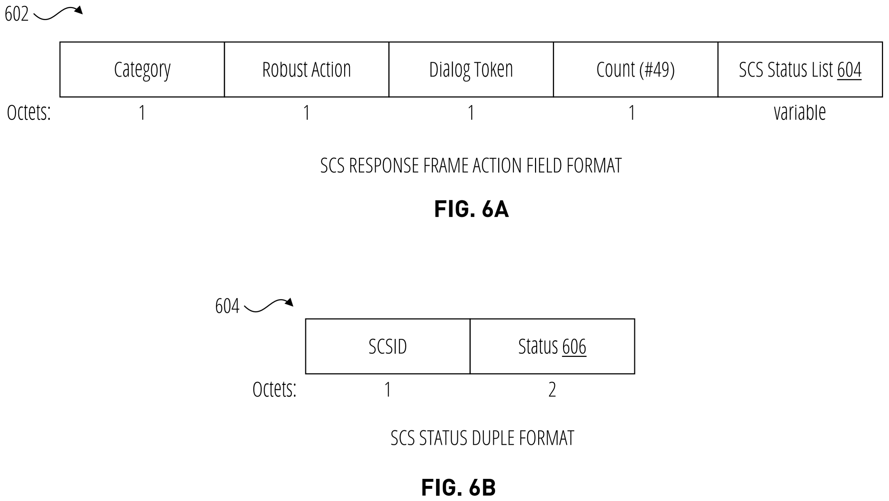

FIGS. 6A-6C illustrate aspects of an example SCS response that may be used by an AP to respond to a request from the STA to use HP EDCA. FIG. 6A illustrates an example SCS Response frame Action field 602 in accordance with some embodiments. The SCS Response frame Action field 602 may include an SCS Status List 604. The SCS Status List 604 may include an indication of whether or not the use of HP EDCA is accepted or rejected.

For example, FIG. 6B illustrates an example format of an SCS Status List 604 in accordance with some embodiments. As shown, the SCS Status List 604 may include a status field 606. The status field 606 may indicate the status of the request from the STA. The AP may include a code in the status field 606 that indicates the status of the request from the STA.

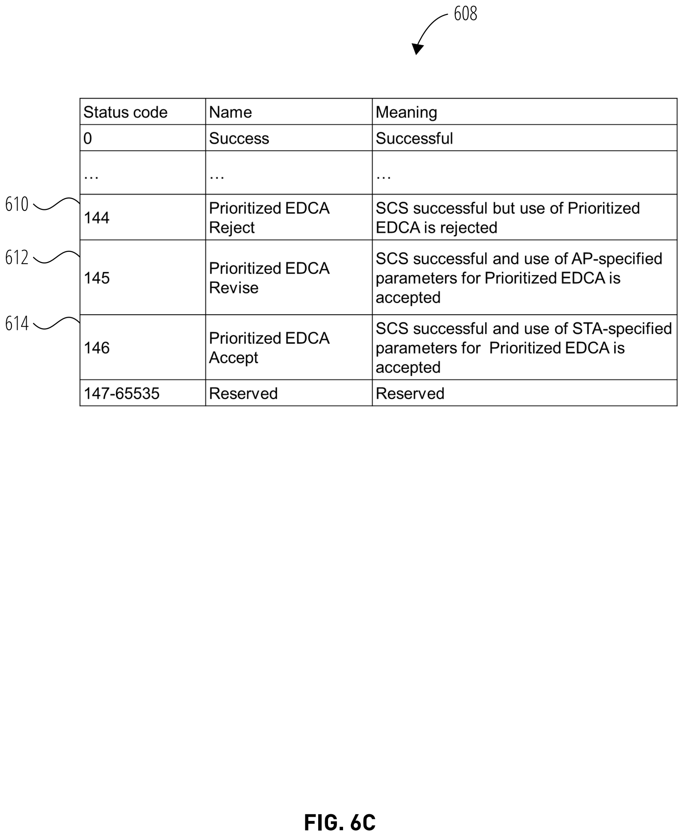

For example, FIG. 6C illustrates an example status code table 608 in accordance with some embodiments. As shown different status codes may be used by the AP to indicate different responses to the STA request. A first status code 610 (e.g., the first status code 610 may be 144) may indicate that the request for Prioritized EDCA is rejected. The first status code 610 may indicate to the STA that the SCS request was successful but use of Prioritized EDCA is rejected.

A second status code 612 (e.g., the second status code 612 may be 145) may indicate that the request for Prioritized EDCA should be revised. The second status code 612 may indicate to the STA that the SCS request was successful and the use of AP-specified parameters for Prioritized EDCA is accepted. Accordingly, instead of using the parameters that the STA provided in the request, if the STA is to use the prioritized EDCA it should use parameters that the AP specifies.

A third status code 614 (e.g., the third status code 614 may be 146) may indicate that the request for Prioritized EDCA is accepted. The third status code 614 may indicate to the STA that the SCS request was successful and the use of STA-specified parameters for Prioritized EDCA is accepted.

The STA may be allowed to use HP EDCA if the AP has accepted the request to use HP EDCA, and certain conditions are met. In some embodiments, the STA may be allowed to use HP EDCA if the delay bound is being reached for the pending MSDUs, or if the STA has not been triggered beyond Max Service Interval. The STA may not be allowed to use HP EDCA more than a threshold number of times (e.g., once) between two consecutive triggering events.

Parameters of prioritized EDCA may define aspects of the use of HP EDCA transmissions. In some embodiments, low latency data may be defined. Without a proper definition, HP EDCA may be used by many types of traffic. There may be conditions to transmit the DS/CTS signal for HP EDCA.

For instance, in some embodiments, the condition to transmit DS/CTS may be based on retry count (e.g., if MSDUs transmitted but not ACKed: QSRC[AC_VO]>threshold). For instance, in some embodiments, an STA may be allowed to transmit DS/CTS for HP EDCA if it attempted to transmit an MSDU and did not receive an ACK from the AP a threshold number of times.

In some embodiments, the condition to transmit DS/CTS may be based on delay bound being reached for the pending MSDUs. For instance, if a delay bound is reached for sending an MSDU, the STA may transmit a DS/CTS to transmit the MSDU via HP EDCA.

In some embodiments, the use of HP EDCA may be limited to certain access categories. For example, in some embodiments, only AC_VO may be allowed to use HP EDCA. The channel access parameters to transmit DS may be AIFSN=2 and CW=0. Regarding the short contention period, the duration of the short contention period may be a set amount of time (e.g., EIFS=94us). Channel access after transmission of DS frame may be AIFSN=2, CWmin/CWmax=7. Regarding DS/CTS retry count, a number of allowed consecutive HP EDCA attempts (retries) may be defined.

In some embodiments, a new parameter may define a limit to the use of the DS/CTS transmission for HP EDCA. DS/CTS use limit may be the allowed number of successful HP EDCA transmissions per an interval. For example, some embodiments may introduce HP EDCA Timer. The timer may define when the STA may send a next DS/CTS transmission. For example, if the HP EDCA Timer has not reached zero, the STA may not be allowed to sed DS/CTS.

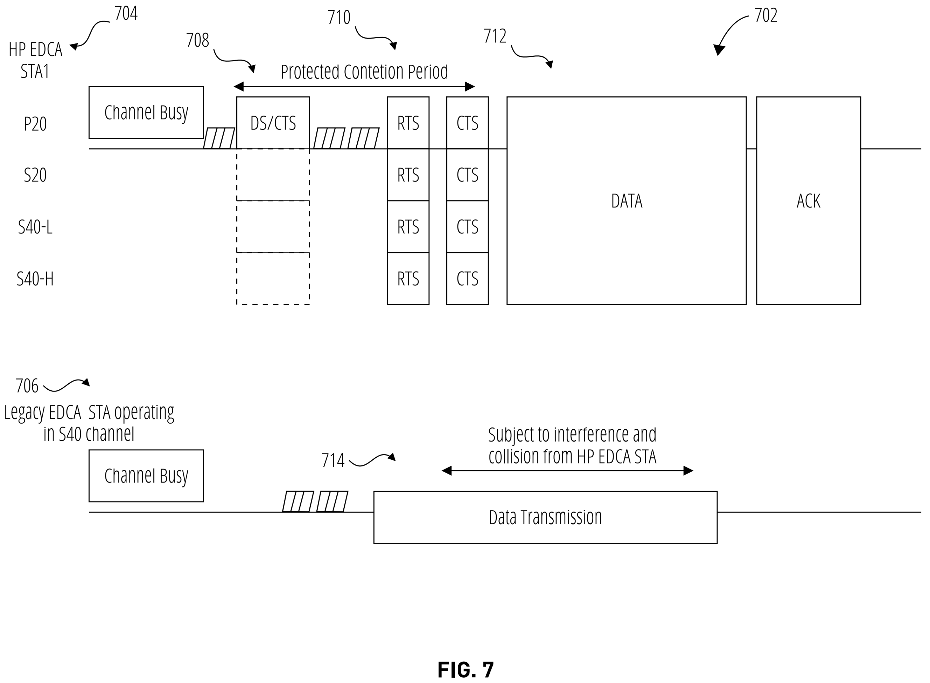

FIG. 7 illustrates an example transmission timeline 702 for HP EDCA in accordance with some embodiments. As previously discussed, the DS frame may be a CTS frame. The bandwidth of DS/CTS frame may be based on the bandwidth of the associated RTS frame. For example, the DS/CTS frame may have a larger or same bandwidth as the follow-up RTS frame. Otherwise, when the bandwidth of the DS/CTS frame is smaller than that of the follow-up RTS frame, there is a possibility of unfairness for the STAs that operate (or have their primary channel) on the remaining channels (i.e., all channels excluding the primary channel of the transmitter of the DS frame).

For example, in the illustrated embodiment, the HP EDCA STA 704 sends a DS/CTS frame 708 using a 20 MHz bandwidth. However, the follow-up RTS frame 710 and data 712 are sent using an 80 MHz bandwidth. As a result, the legacy EDCA STA 706 may send a data transmission 714 that is subject to interference and collision from the HP EDCA STA 704.

To present such a collision or interference between the HP EDCA STA 704 and legacy EDCA STA 706, the HP EDCA STA 704 may send the DS/CTS frame in 80 MHz bandwidth, in non-HT Duplicate format, in the illustrated example. The HP EDCA STA 704 may send the DS/CTS frame 708 using a same or larger bandwidth than it intends to send the RTS frame (e.g., 20 MHz, 40 MHz, 60 MHz, or 80 MHz).

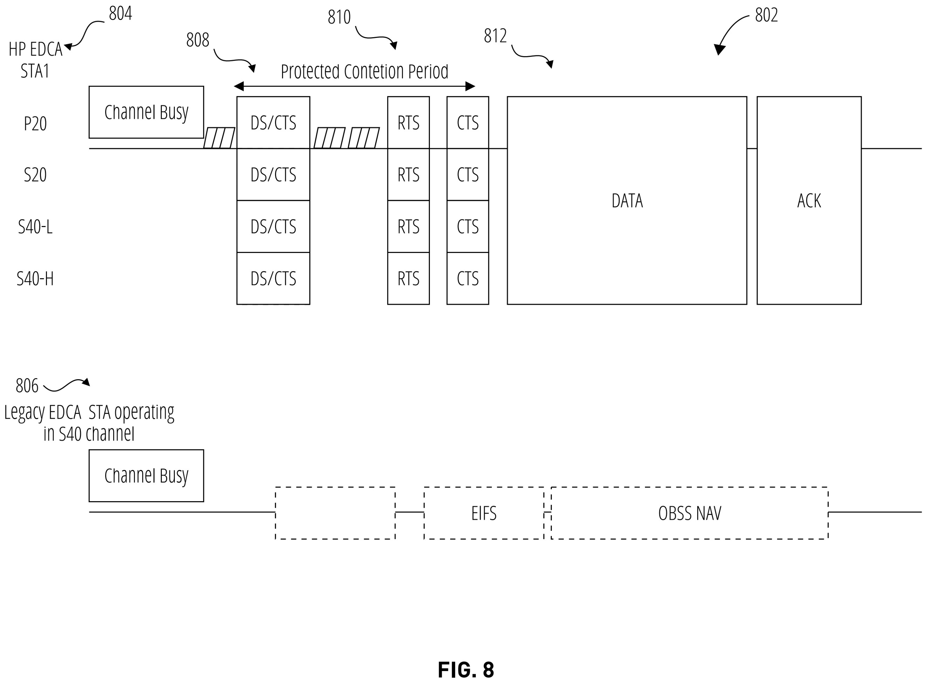

For example, FIG. 8 illustrates an example transmission timeline 802 for HP EDCA in accordance with some embodiments. As previously discussed, the DS frame may be a CTS frame. The bandwidth of DS/CTS frame may be based on the bandwidth of the associated RTS frame. For wideband channel use fairness, the bandwidth of the RTS frame should not exceed the bandwidth of the preceding DS/CTS frame. Moreover, the DS/CTS frame may be transmitted in non-HT duplicate format, where the same content of DS/CTS frame on the primary 20MHz band is repeated across each remaining 20MHz sub-band.

For example, in the illustrated embodiment, HP EDCA STA 804 sends the DS/CTS frame 808 with the same bandwidth as the follow-up RTS frame 810 and data 812. As a result, the legacy EDCA STA 806 may not send a data transmission, thereby preventing collisions.

The content of a DS/CTS frame may depend on the following: Frame Control and Duration fields, receive address (RA), and Scrambler seed. For the Frame Control and Duration fields, these fields may be set as in the baseline specification. In some embodiments, the STA may set the Modulation and Coding Scheme (MCS) of the DS/CTS frame to a known MCS that is previously indicated by the AP in the Beacon frame or communicated to each associated STA during association. In some embodiments, the STA may set the MCS of the DS/CTS frame to a known MCS as specified in the 802.11 specification, such as MCS0 or MCS1.

For the RA address, the DS/CTS frame may have only one address field: RA. The choices to set the RA field may include the following. In some embodiments, the STA may set RA to Basic Service Set Identifier (BSSID). BSSID is a unique address in a BSS. In some embodiments, the STA may set RA to a known address that is previously indicated by the AP in the Beacon frame or communicated to each associated STA during association. In some embodiments, the STA may set RA to a known address that is specified in 802.11 specification, such a Broadcast address.

In some embodiments, the STA may set RA to a predefined address used by all HP EDCA STAs. For example, the STAs may use a reserved MAC address for CTS transmitted per HP EDCA rule. This can help all the UHR APs to recognize the transmission of CTS using HP EDCA and manage the extent and how often HP EDCA is used, even in OBSS scenarios where STAs associated with other APs using the HP EDCA.

Regarding the scrambler seed, the scrambler seed changes the bit sequence of a frame. So even if two DS/CTS frames have the same content, if their scrambler seed is different the bit sequence of the two frames may be different, and if the two CTS frames are transmitted at the same time the OFDM symbols that carry the MAC payloads could collide. To reduce the chance of collision among multiple DS/CTS frames, the HP EDCA STAs may always use the same scrambler seed when they transmit a CTS as DS frame. However, given an HP EDCA STA is not aware if other STAs transmitting a CTS as DS frame, a common/unique scrambler seed can be specified for DS/CTS frames. In another embodiment, all HP EDCA STAs that attempt to transmit a DS or CTS frame after the last PPDU from the previous TXOP may use the same scrambling sequence as the scrambling sequence of the last PPDU from the previous TXOP. For example, STA 3 and STA 4 in FIG. 2 may both use the same scrambling sequence from the last PPDU of the last frame of TXOP 204. This may ensure that both STA 3 and STA 4 use the same scrambling sequence.

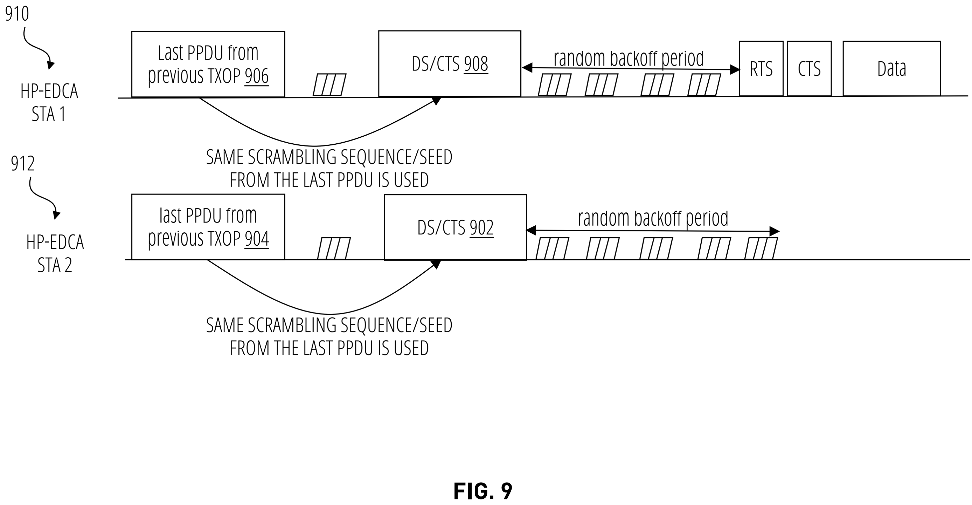

For example, FIG. 9 illustrates an example transmission timeline where a same scrambling sequence/seed is used from a last PPDU from previous TXOP, in accordance with some embodiments. As shown, HP-EDCA STA1 910 may use a scrambling sequence/seed during a last PPDU from previous TXOP 906. The HP-EDCA STA1 910 may use the same scrambling sequence/seed from the last PPDU when sending DS/CTS 908. Similarly, HP-EDCA STA2 912 may use a scrambling sequence/seed during a last PPDU from previous TXOP 904. The HP-EDCA STA2 912 may use the same scrambling sequence/seed from the last PPDU when sending DS/CTS 902.

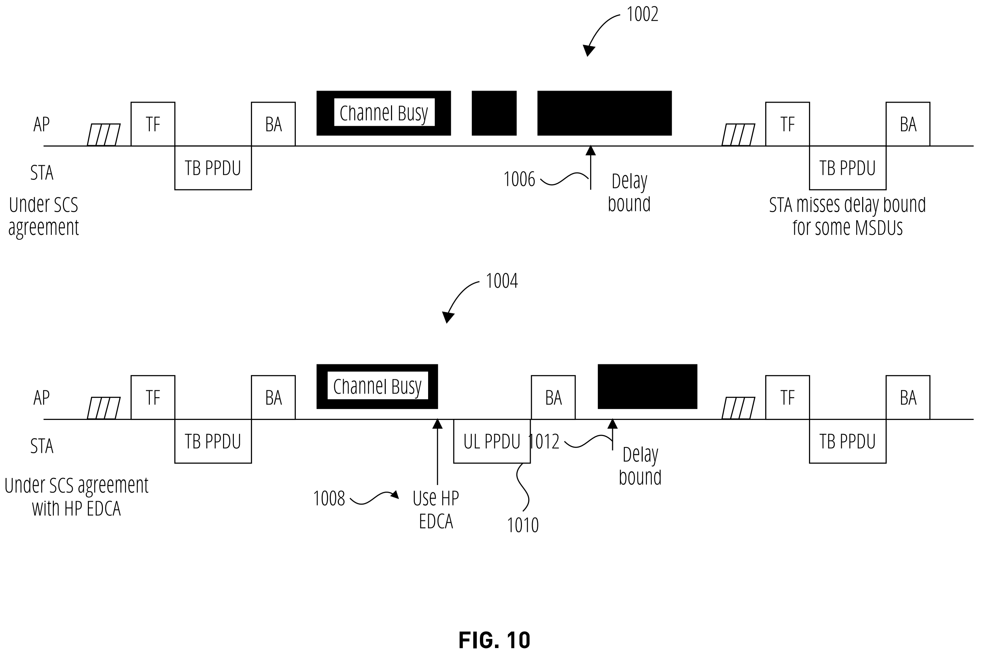

FIG. 10 illustrates two example transmission timelines, where a first transmission timeline 1002 does not use HP EDCA and a second transmission timeline 1004 uses HP EDCA in accordance with some embodiments. This example illustrates a motivation for prioritized EDCA in SCS.

For QoS flows with tight delay bounds, an STA may fail to meet the delay bound. The STA may fail to meet the delay bound due to being insufficiently triggered by the AP. This may happen for reasons such as AP have overcommitted, STA is not triggered with a sufficient RU, STA is not triggered often enough, channel being busy at the AP side, etc. Another reason the STA may fail to meet the delay bound is due to aperiodic or jitter in data-arrival at the STA side. In the illustrated example of the first transmission timeline 1002, the STA fails to meet the delay bound 1006.

HP EDCA could help in these cases to let the STA transmit its delay-bound approaching MSDUs. For example, in the second transmission timeline 1004, the STA uses HP EDCA 1008 and is successfully able to send an UL PPDU 1010 before the delay bound 1012.

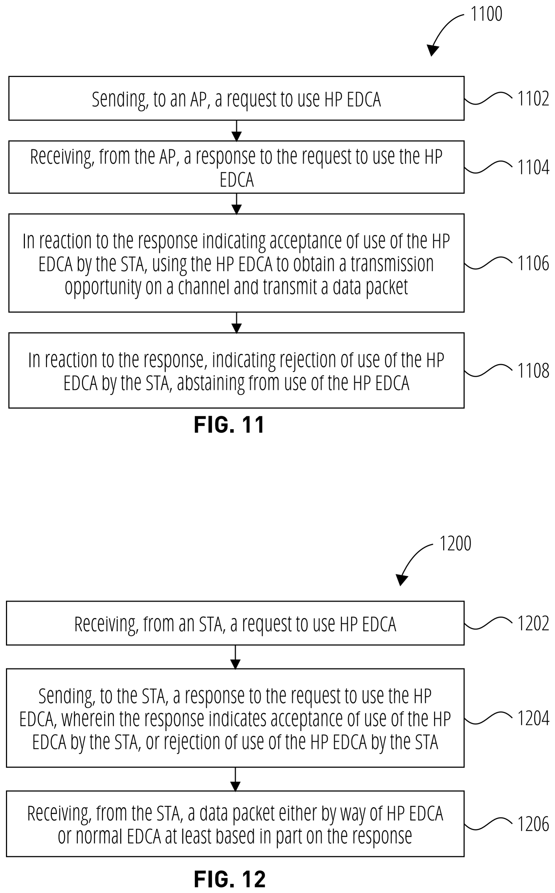

FIG. 11 illustrated a method 1100 performed by an STA, according to embodiments herein. The illustrated method 1100 includes sending 1102, to an AP, a request to use HP EDCA. The method 1100 further includes receiving 1104, from the AP, a response to the request to use the HP EDCA. The method 1100 further includes, in reaction to the response indicating acceptance of use of the HP EDCA by the STA, using 1106 the HP EDCA to obtain a transmission opportunity on a channel and transmit a data packet. The method 1100 further includes, in reaction to the response indicating rejection of use of the HP EDCA by the STA, abstaining 1108 from use of the HP EDCA.

In some embodiments of the method 1100, the HP EDCA is allowed to be used if a delay bound is being reached for some pending MSDU, or if the STA has not been triggered beyond a max service interval.

In some embodiments of the method 1100, the STA is not allowed to use the HP EDCA more than a threshold number of times between two consecutive triggerings.

In some embodiments of the method 1100, the request comprises an SCS request frame that includes a QoS Characteristics element with an HP EDCA Usage field.

In some embodiments of the method 1100, the STA uses a default HP EDCA parameter set.

In some embodiments, the method 1100 further comprises negotiating an HP EDCA parameter set with the AP. Some such embodiments further comprise sending a requested HP EDCA parameter set to the AP, and receiving, in the response, a revised HP EDCA parameter set.

In some embodiments of the method 1100, using the HP EDCA comprises sending a CTS frame, wherein transmission of the CTS frame for the HP EDCA is limited by an HP EDCA Timer.

In some embodiments of the method 1100, using the HP EDCA comprises sending a CTS frame and a corresponding RTS frame, wherein the CTS frame has larger or same bandwidth as the corresponding RTS frame.

In some embodiments of the method 1100, using the HP EDCA comprises sending a CTS frame, wherein the CTS frame includes an RA and a scrambler seed, wherein for all CTS frames used for the HP EDCA the RA is a reserved MAC address for DS/CTS transmitted per HP EDCA rule, and wherein for all CTS frames used for the HP EDCA the scrambler seed is the same.

FIG. 12 illustrated a method 1200 performed by an AP, according to embodiments herein. The illustrated method 1200 includes receiving 1202, from an STA, a request to use HP EDCA. The method 1200 further includes sending 1204, to the STA, a response to the request to use the HP EDCA, wherein the response indicates acceptance of use of the HP EDCA by the STA, or rejection of use of the HP EDCA by the STA. The method 1200 further includes receiving 1206, from the STA, a data packet either by way of HP EDCA or normal EDCA at least based in part on the response.

In some embodiments of the method 1200, the HP EDCA is allowed to be used if a delay bound is being reached for some pending MSDU, or if the STA has not been triggered beyond a max service interval and the response indicates acceptance of the use of the HP EDCA.

In some embodiments of the method 1200, a threshold number of times is defined and the STA is not allowed to use the HP EDCA more than the threshold number of times between two consecutive triggerings.

In some embodiments of the method 1200, the request comprises an SCS request frame that includes a QoS Characteristics element with an HP EDCA Usage field.

In some embodiments of the method 1200, a default HP EDCA parameter set is defined for use of the HP EDCA.

In some embodiments, the method 1200 further comprises negotiating an HP EDCA parameter set with the STA. Some such embodiments further comprise receiving a requested HP EDCA parameter set from the STA, and sending, in the response, a revised HP EDCA parameter set.

In some embodiments, the method 1200 further comprises setting an HP EDCA Timer, wherein transmission of a CTS frame for the HP EDCA is limited by the HP EDCA Timer.

In some embodiments, the method 1200 further comprises receiving, from the STA, a CTS frame and a corresponding RTS frame for the HP EDCA, wherein the CTS frame has larger or same bandwidth as the corresponding RTS frame.

In some embodiments, the method 1200 further comprises receiving a CTS frame from the STA for the HP EDCA, wherein the CTS frame includes an RA and a scrambler seed, wherein for all CTS frames used for the HP EDCA the RA is a reserved MAC address for DS/CTS transmitted per HP EDCA rule, and wherein for all CTS frames used for the HP EDCA the scrambler seed is the same.

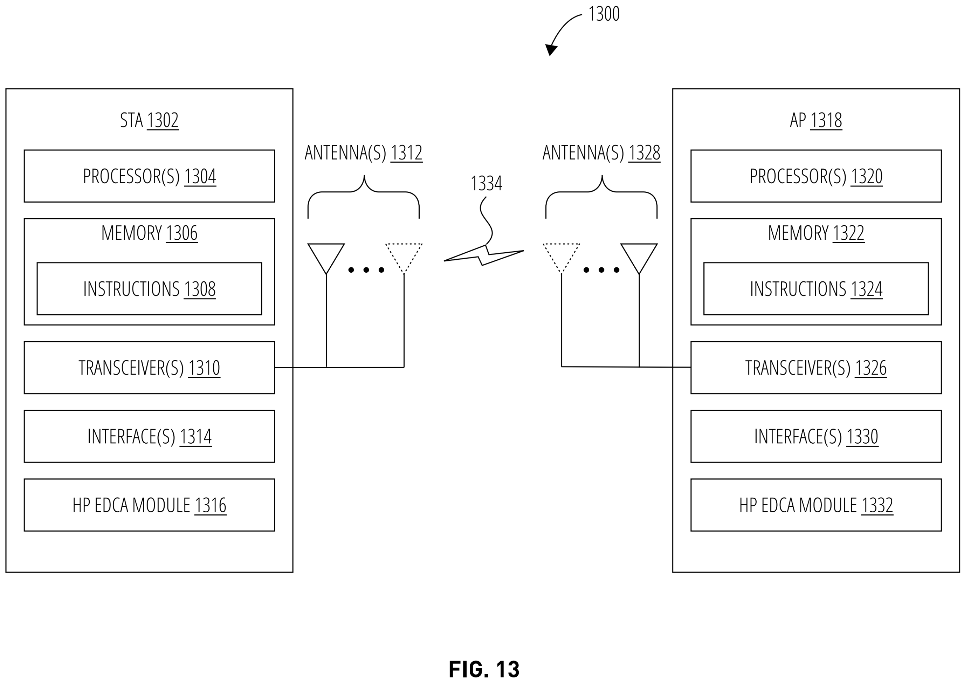

FIG. 13 illustrates a system 1300 for performing signaling 1334 between an STA 1302 and an AP 1318, according to embodiments disclosed herein. The system 1300 may be a portion of a wireless communications system as described herein. The STA 1302 may be, for example, a UE of a wireless communication system. The AP 1318 may be, for example, an access point of a wireless communication system.

The STA 1302 may include one or more processor(s) 1304. The processor(s) 1304 may execute instructions such that various operations of the STA 1302 are performed, as described herein. The processor(s) 1304 may include one or more baseband processors implemented using, for example, a central processing unit (CPU), a digital signal processor (DSP), an application specific integrated circuit (ASIC), a controller, a field programmable gate array (FPGA) device, another hardware device, a firmware device, or any combination thereof configured to perform the operations described herein.

The STA 1302 may include a memory 1306. The memory 1306 may be a non-transitory computer-readable storage medium that stores instructions 1308 (which may include, for example, the instructions being executed by the processor(s) 1304). The instructions 1308 may also be referred to as program code or a computer program. The memory 1306 may also store data used by, and results computed by, the processor(s) 1304.

The STA 1302 may include one or more transceiver(s) 1310 that may include radio frequency (RF) transmitter circuitry and/or receiver circuitry that use the antenna(s) 1312 of the STA 1302 to facilitate signaling (e.g., the signaling 1334) to and/or from the STA 1302 with other devices (e.g., the AP 1318).

The STA 1302 may include one or more antenna(s) 1312 (e.g., one, two, four, or more). For embodiments with multiple antenna(s) 1312, the STA 1302 may leverage the spatial diversity of such multiple antenna(s) 1312 to send and/or receive multiple different data streams on the same time and frequency resources. This behavior may be referred to as, for example, multiple input multiple output (MIMO) behavior (referring to the multiple antennas used at each of a transmitting device and a receiving device that enable this aspect). MIMO transmissions by the STA 1302 may be accomplished according to precoding (or digital beamforming) that is applied at the STA 1302 that multiplexes the data streams across the antenna(s) 1312 according to known or assumed channel characteristics such that each data stream is received with an appropriate signal strength relative to other streams and at a desired location in the spatial domain (e.g., the location of a receiver associated with that data stream). Certain embodiments may use single user MIMO (SU-MIMO) methods (where the data streams are all directed to a single receiver) and/or multi user MIMO (MU-MIMO) methods (where individual data streams may be directed to individual (different) receivers in different locations in the spatial domain).

In certain embodiments having multiple antennas, the STA 1302 may implement analog beamforming techniques, whereby phases of the signals sent by the antenna(s) 1312 are relatively adjusted such that the (joint) transmission of the antenna(s) 1312 can be directed (this is sometimes referred to as beam steering).

The STA 1302 may include one or more interface(s) 1314. The interface(s) 1314 may be used to provide input to or output from the STA 1302. For example, an STA 1302 that is a UE may include interface(s) 1314 such as microphones, speakers, a touchscreen, buttons, and the like in order to allow for input and/or output to the UE by a user of the UE. Other interfaces of such a UE may be made up of transmitters, receivers, and other circuitry (e.g., other than the transceiver(s) 1310/antenna(s) 1312 already described) that allow for communication between the UE and other devices and may operate according to known protocols (e.g., Wi-Fi^{®}, Bluetooth^{®}, and the like).

The STA 1302 may include an HP EDCA module 1316. The HP EDCA module 1316 may be implemented via hardware, software, or combinations thereof. For example, the HP EDCA module 1316 may be implemented as a processor, circuit, and/or instructions 1308 stored in the memory 1306 and executed by the processor(s) 1304. In some examples, the HP EDCA module 1316 may be integrated within the processor(s) 1304 and/or the transceiver(s) 1310. For example, the HP EDCA module 1316 may be implemented by a combination of software components (e.g., executed by a DSP or a general processor) and hardware components (e.g., logic gates and circuitry) within the processor(s) 1304 or the transceiver(s) 1310.

The HP EDCA module 1316 may be used for various aspects of the present disclosure, for example, aspects of FIGS. 1-12.

The AP 1318 may include one or more processor(s) 1320. The processor(s) 1320 may execute instructions such that various operations of the AP 1318 are performed, as described herein. The processor(s) 1320 may include one or more baseband processors implemented using, for example, a CPU, a DSP, an ASIC, a controller, an FPGA device, another hardware device, a firmware device, or any combination thereof configured to perform the operations described herein.

The AP 1318 may include a memory 1322. The memory 1322 may be a non-transitory computer-readable storage medium that stores instructions 1324 (which may include, for example, the instructions being executed by the processor(s) 1320). The instructions 1324 may also be referred to as program code or a computer program. The memory 1322 may also store data used by, and results computed by, the processor(s) 1320.

The AP 1318 may include one or more transceiver(s) 1326 that may include RF transmitter circuitry and/or receiver circuitry that use the antenna(s) 1328 of the AP 1318 to facilitate signaling (e.g., the signaling 1334) to and/or from the AP 1318 with other devices (e.g., the STA 1302).

The AP 1318 may include one or more antenna(s) 1328 (e.g., one, two, four, or more). In embodiments having multiple antenna(s) 1328, the AP 1318 may perform MIMO, digital beamforming, analog beamforming, beam steering, etc., as has been described.

The AP 1318 may include one or more interface(s) 1330. The interface(s) 1330 may be used to provide input to or output from the AP 1318. For example, an AP 1318 that is a base station may include interface(s) 1330 made up of transmitters, receivers, and other circuitry (e.g., other than the transceiver(s) 1326/antenna(s) 1328 already described) that enables the base station to communicate with other equipment in a core network, and/or that enables the base station to communicate with external networks, computers, databases, and the like for purposes of operations, administration, and maintenance of the base station or other equipment operably connected thereto.

The AP 1318 may include an HP EDCA module 1332. The HP EDCA module 1332 may be implemented via hardware, software, or combinations thereof. For example, the HP EDCA module 1332 may be implemented as a processor, circuit, and/or instructions 1324 stored in the memory 1322 and executed by the processor(s) 1320. In some examples, the HP EDCA module 1332 may be integrated within the processor(s) 1320 and/or the transceiver(s) 1326. For example, the HP EDCA module 1332 may be implemented by a combination of software components (e.g., executed by a DSP or a general processor) and hardware components (e.g., logic gates and circuitry) within the processor(s) 1320 or the transceiver(s) 1326.

The HP EDCA module 1332 may be used for various aspects of the present disclosure, for example, aspects of FIGS. 1-12.

Embodiments contemplated herein include an apparatus comprising means to perform one or more elements of the method 1100. This apparatus may be, for example, an apparatus of a STA (such as STA 1302 as described herein).

Embodiments contemplated herein include one or more non-transitory computer-readable media comprising instructions to cause an electronic device, upon execution of the instructions by one or more processors of the electronic device, to perform one or more elements of the method 1100. This non-transitory computer-readable media may be, for example, a memory of a STA (such as a memory 1306 of an STA 1302, as described herein).

Embodiments contemplated herein include an apparatus comprising logic, modules, or circuitry to perform one or more elements of the method 1100. This apparatus may be, for example, an apparatus of a STA (such as an STA 1302, as described herein).

Embodiments contemplated herein include an apparatus comprising: one or more processors and one or more computer-readable media comprising instructions that, when executed by the one or more processors, cause the one or more processors to perform one or more elements of the method 1100. This apparatus may be, for example, an apparatus of a STA (such as an STA 1302, as described herein).

Embodiments contemplated herein include a signal as described in or related to one or more elements of the method 1100.

Embodiments contemplated herein include a computer program or computer program product comprising instructions, wherein execution of the program by a processor is to cause the processor to carry out one or more elements of the method 1100. The processor may be a processor of a STA (such as a processor(s) 1304 of an STA 1302, as described herein). These instructions may be, for example, located in the processor and/or on a memory of the STA (such as a memory 1306 of an STA 1302, as described herein).

Embodiments contemplated herein include an apparatus comprising means to perform one or more elements of the method 1200. This apparatus may be, for example, an apparatus of an AP (such as an AP 1318, as described herein).

Embodiments contemplated herein include one or more non-transitory computer-readable media comprising instructions to cause an electronic device, upon execution of the instructions by one or more processors of the electronic device, to perform one or more elements of the method 1200. This non-transitory computer-readable media may be, for example, a memory of an AP (such as a memory 1322 of an AP 1318, as described herein).

Embodiments contemplated herein include an apparatus comprising logic, modules, or circuitry to perform one or more elements of the method 1200. This apparatus may be, for example, an apparatus of an AP (such as an AP 1318, as described herein).

Embodiments contemplated herein include an apparatus comprising: one or more processors and one or more computer-readable media comprising instructions that, when executed by the one or more processors, cause the one or more processors to perform one or more elements of the method 1200. This apparatus may be, for example, an apparatus of an AP (such as an AP 1318, as described herein).

Embodiments contemplated herein include a signal as described in or related to one or more elements of the method 1200.

Embodiments contemplated herein include a computer program or computer program product comprising instructions, wherein execution of the program by a processing element is to cause the processing element to carry out one or more elements of the method 1200. The processor may be a processor of an AP (such as a processor(s) 1320 of an AP 1318, as described herein). These instructions may be, for example, located in the processor and/or on a memory of the AP (such as a memory 1322 of an AP 1318, as described herein).

For one or more embodiments, at least one of the components set forth in one or more of the preceding figures may be configured to perform one or more operations, techniques, processes, and/or methods as set forth herein. For example, a processor as described herein in connection with one or more of the preceding figures may be configured to operate in accordance with one or more of the examples set forth herein. For another example, circuitry associated with a STA or AP as described above in connection with one or more of the preceding figures may be configured to operate in accordance with one or more of the examples set forth herein.

Any of the above-described embodiments may be combined with any other embodiment (or combination of embodiments), unless explicitly stated otherwise. The foregoing description of one or more implementations provides illustration and description, but is not intended to be exhaustive or to limit the scope of embodiments to the precise form disclosed. Modifications and variations are possible in light of the above teachings or may be acquired from practice of various embodiments.

Embodiments and implementations of the systems and methods described herein may include various operations, which may be embodied in machine-executable instructions to be executed by a computer system. A computer system may include one or more general-purpose or special-purpose computers (or other electronic devices). The computer system may include hardware components that include specific logic for performing the operations or may include a combination of hardware, software, and/or firmware.

It should be recognized that the systems described herein include descriptions of specific embodiments. These embodiments can be combined into single systems, partially combined into other systems, split into multiple systems or divided or combined in other ways. In addition, it is contemplated that parameters, attributes, aspects, etc. of one embodiment can be used in another embodiment. The parameters, attributes, aspects, etc. are merely described in one or more embodiments for clarity, and it is recognized that the parameters, attributes, aspects, etc. can be combined with or substituted for parameters, attributes, aspects, etc. of another embodiment unless specifically disclaimed herein.

It is well understood that the use of personally identifiable information should follow privacy policies and practices that are generally recognized as meeting or exceeding industry or governmental requirements for maintaining the privacy of users. In particular, personally identifiable information data should be managed and handled so as to minimize risks of unintentional or unauthorized access or use, and the nature of authorized use should be clearly indicated to users.

Exemplary methods, apparatuses and devices are set out in the following items.
1. A method performed by a Station (STA), the method comprising:
   sending, to an access point (AP), a request to use high priority Enhanced Distributed Channel Access (HP EDCA);
   receiving, from the AP, a response to the request to use the HP EDCA;
   in reaction to the response indicating acceptance of use of the HP EDCA by the STA, using the HP EDCA to obtain a transmission opportunity on a channel and transmit a data packet; and
   in reaction to the response indicating rejection of use of the HP EDCA by the STA, abstaining from use of the HP EDCA.
2. The method of item 1, wherein the HP EDCA is allowed to be used if a delay bound is being reached for some pending Medium Access Control Service Data Units (MSDU), or if the STA has not been triggered beyond a max service interval.
3. The method of any preceding item, wherein the STA is not allowed to use the HP EDCA more than a threshold number of times between two consecutive triggering.
4. The method of any preceding item, wherein the request comprises a Stream Classification Service (SCS) request frame that includes a Quality of Service (QoS) Characteristics element with a HP EDCA Usage field.
5. The method of any preceding item, wherein the STA uses a default HP EDCA parameter set.
6. The method of any preceding item, further comprising negotiating an HP EDCA parameter set with the AP.
7. The method of item 6, further comprising:
   sending a requested HP EDCA parameter set to the AP; and
   receiving, in the response, a revised HP EDCA parameter set.
8. The method of any preceding item, wherein using the HP EDCA comprises sending a clear to send (CTS) frame, wherein transmission of the CTS frame for the HP EDCA is limited by a HP EDCA Timer.
9. The method of any preceding item, wherein using the HP EDCA comprises sending a clear to send (CTS) frame for initiation of HP EDCA contention interval in a Non-High Throughput duplicate (non-HT duplicate) physical protocol data unit (PPDU) format and a corresponding request to send (RTS) frame to initiate a transmission opportunity (TXOP), wherein the CTS frame has larger or same bandwidth as the corresponding RTS frame.
10. The method of any preceding item, wherein using the HP EDCA comprises sending a clear to send (CTS) frame, wherein the CTS frame includes a receive address (RA) and a scrambler seed,
   wherein for all CTS frames used for the HP EDCA the RA is a reserved MAC address for DS/CTS transmitted per HP EDCA rule, and
   wherein for all CTS frames used for the HP EDCA the scrambler seed is the same.
11. The method of any preceding item, wherein using the HP EDCA comprises sending a clear to send (CTS) frame, wherein the CTS frame uses a same scrambling sequence as was used for a last Physical Protocol Data Unit (PPDU) from a previous transmission opportunity (TXOP).
12. The method of any preceding item, wherein using the HP EDCA comprises sending a clear to send (CTS) frame, wherein the CTS frame comprises:
   a known Modulation and Coding Scheme (MCS) that was indicated by the AP in a Beacon frame, or communicated during association, or prespecified; and
   a receive address (RA) set to a known address that was indicated by the AP in the Beacon frame, or communicated during the association, or prespecified.
13. A method performed by an access point (AP), the method comprising:
   receiving, from a Station (STA), a request to use high priority Enhanced Distributed Channel Access (HP EDCA); and
   sending, to the STA, a response to the request to use the HP EDCA,
      wherein the response indicates acceptance of use of the HP EDCA by the STA, or
      rejection of use of the HP EDCA by the STA; and
   receiving, from the STA, a data packet either by way of HP EDCA or normal EDCA at least based in part on the response.
14. The method of item 13, wherein the HP EDCA is allowed to be used if a delay bound is being reached for some pending Medium Access Control Service Data Units (MSDU), or if the STA has not been triggered beyond a max service interval and the response indicates acceptance of the use of the HP EDCA.
15. The method of item 13 or 14, wherein a threshold number of times is defined and the STA is not allowed to use the HP EDCA more than the threshold number of times between two consecutive triggering.
16. The method of any of items 13-15, wherein the request comprises a Stream Classification Service (SCS) request frame that includes a Quality of Service (QoS) Characteristics element with a HP EDCA Usage field.
17. The method of any of items 13-16, wherein a default HP EDCA parameter set is defined for use of the HP EDCA.
18. The method of any of items 13-17, further comprising negotiating an HP EDCA parameter set with the STA.
19. The method of item 18, further comprising:
   receiving a requested HP EDCA parameter set from the STA; and
   sending, in the response, a revised HP EDCA parameter set.
20. The method of any of items 13-19, further comprising setting a HP EDCA Timer, wherein transmission of a CTS frame for the HP EDCA is limited by the HP EDCA Timer.
21. The method of any of items 13-20, further comprising receiving, from the STA, a clear to send (CTS) frame for initiating HP EDCA in a Non-High Throughput duplicate (non-HT duplicate) physical protocol data unit (PPDU) format and, after a contention interval, a corresponding request to send (RTS) frame for initiating a transmission opportunity (TXOP) from the STA, wherein the CTS frame has larger or same bandwidth as the corresponding RTS frame.
22. The method of any of items 13-21, further comprising receiving a clear to send (CTS) frame from the STA for the HP EDCA, wherein the CTS frame includes a receive address (RA) and a scrambler seed,
   wherein for all CTS frames used for the HP EDCA the RA is a reserved MAC address for DS/CTS transmitted per HP EDCA rule, and
   wherein for all CTS frames used for the HP EDCA the scrambler seed is the same.
23. An apparatus comprising means to perform the method of any of item 1 to item 22.
24. A computer-readable media comprising instructions to cause an electronic device, upon execution of the instructions by one or more processors of the electronic device, to perform the method of any of item 1 to item 22.
25. An apparatus comprising logic, modules, or circuitry to perform the method of any of item 1 to item 22.
26. A method comprising one or more operations corresponding to a high priority Enhanced Distributed Channel Access (HP EDCA) device, as disclosed herein.
27. A device configured to interact with a high priority Enhanced Distributed Channel Access (HP EDCA) device in accordance with one or more operations disclosed herein.

Although the foregoing has been described in some detail for purposes of clarity, it will be apparent that certain changes and modifications may be made without departing from the principles thereof. It should be noted that there are many alternative ways of implementing both the processes and apparatuses described herein. Accordingly, the present embodiments are to be considered illustrative and not restrictive, and the description is not to be limited to the details given herein, but may be modified within the scope and equivalents of the appended claims.

## Claims

1. A method performed by a Station (STA), the method comprising:
sending, to an access point (AP), a request to use high priority Enhanced Distributed Channel Access (HP EDCA);
receiving, from the AP, a response to the request to use the HP EDCA;
in reaction to the response indicating acceptance of use of the HP EDCA by the STA, using the HP EDCA to obtain a transmission opportunity on a channel and transmit a data packet; and
in reaction to the response indicating rejection of use of the HP EDCA by the STA, abstaining from use of the HP EDCA.

2. The method of claim 1, wherein the HP EDCA is allowed to be used if a delay bound is being reached for some pending Medium Access Control Service Data Units (MSDU), or if the STA has not been triggered beyond a max service interval.

3. The method of claim 1 or 2, wherein the STA is not allowed to use the HP EDCA more than a threshold number of times between two consecutive triggering.

4. The method of any of claims 1-3, wherein the STA uses a default HP EDCA parameter set.

5. The method of any of claims 1-4, further comprising negotiating an HP EDCA parameter set with the AP.

6. The method of claim 5, further comprising:
sending a requested HP EDCA parameter set to the AP; and
receiving, in the response, a revised HP EDCA parameter set.

7. The method of any of claims 1-6, wherein using the HP EDCA comprises:
sending a clear to send (CTS) frame, wherein transmission of the CTS frame for the HP EDCA is limited by an HP EDCA Timer; or
sending a clear to send (CTS) frame for initiation of HP EDCA contention interval in a Non-High Throughput duplicate (non-HT duplicate) physical protocol data unit (PPDU) format and a corresponding request to send (RTS) frame to initiate a transmission opportunity (TXOP), wherein the CTS frame has larger or same bandwidth as the corresponding RTS frame; or
sending a clear to send (CTS) frame, wherein the CTS frame includes a receive address (RA) and a scrambler seed, wherein for all CTS frames used for the HP EDCA the RA is a reserved MAC address for DS/CTS transmitted per HP EDCA rule, and wherein for all CTS frames used for the HP EDCA the scrambler seed is the same;
sending a clear to send (CTS) frame, wherein the CTS frame uses a same scrambling sequence as was used for a last Physical Protocol Data Unit (PPDU) from a previous transmission opportunity (TXOP); or
sending a clear to send (CTS) frame, wherein the CTS frame comprises:
a known Modulation and Coding Scheme (MCS) that was indicated by the AP in a Beacon frame, or communicated during association, or prespecified; and
a receive address (RA) set to a known address that was indicated by the AP in the Beacon frame, or communicated during the association, or prespecified.

8. A method performed by an access point (AP), the method comprising:
receiving, from a Station (STA), a request to use high priority Enhanced Distributed Channel Access (HP EDCA); and
sending, to the STA, a response to the request to use the HP EDCA,
wherein the response indicates acceptance of use of the HP EDCA by the STA, or
rejection of use of the HP EDCA by the STA; and
receiving, from the STA, a data packet either by way of HP EDCA or normal EDCA at least based in part on the response.

9. The method of claim 8, wherein the HP EDCA is allowed to be used if a delay bound is being reached for some pending Medium Access Control Service Data Units (MSDU), or if the STA has not been triggered beyond a max service interval and the response indicates acceptance of the use of the HP EDCA.

10. The method of claim 8 or 9, wherein a threshold number of times is defined and the STA is not allowed to use the HP EDCA more than the threshold number of times between two consecutive triggering.

11. The method of any of claims 8-10, further comprising:
negotiating an HP EDCA parameter set with the STA;
receiving a requested HP EDCA parameter set from the STA; and
sending, in the response, a revised HP EDCA parameter set.

12. The method of any of claims 8-11, further comprising setting an HP EDCA Timer, wherein transmission of a CTS frame for the HP EDCA is limited by the HP EDCA Timer.

13. The method of any of claims 8-12, further comprising receiving, from the STA, a clear to send (CTS) frame for initiating HP EDCA in a Non-High Throughput duplicate (non-HT duplicate) physical protocol data unit (PPDU) format and, after a contention interval, a corresponding request to send (RTS) frame for initiating a transmission opportunity (TXOP) from the STA, wherein the CTS frame has larger or same bandwidth as the corresponding RTS frame.

14. The method of any of claims 8-13, further comprising receiving a clear to send (CTS) frame from the STA for the HP EDCA, wherein the CTS frame includes a receive address (RA) and a scrambler seed,
wherein for all CTS frames used for the HP EDCA the RA is a reserved MAC address for DS/CTS transmitted per HP EDCA rule, and
wherein for all CTS frames used for the HP EDCA the scrambler seed is the same.

15. The method of any preceding claim, wherein the request comprises a Stream Classification Service (SCS) request frame that includes a Quality of Service (QoS) Characteristics element with an HP EDCA Usage field.
